# DEMANDE DE BREVET EUROPEEN

(11) **EP 3 620 433 A1**
(43) Date de publication de la demande: **11.03.2020**
(21) Numéro de dépôt: 19195028.6
(22) Date de dépôt: 06.04.2012
(51) Int. Cl.: C01B 21/093, H01M 10/0525, C01B 21/086, H01M 10/052, H01M 10/054, H01M 10/0568

(54) **BIS(FLUOROSULFONYL)IMIDURE DE LITHIUM**

(30) Priorité: 24.05.2011 FR 1154490; 23.03.2012 FR 1252642
(62) Demande divisionnaire de: 12718707.8
(71) Demandeur: ARKEMA FRANCE, 92700 Colombes (FR)
(72) Inventeur: SCHMIDT, Grégory, 69493 PIERRE-BENITE Cedex (FR)
(74) Mandataire: Chahine, Audrey Claire

(57) **Abrégé**

L'invention concerne un procédé de préparation d'un sel de bis(sulfonate)imidure de formule :

(III) (SO₃⁻)-N⁻-(SO₃⁻),3C⁺

où C⁺ représente un cation monovalent, comprenant la réaction de l'acide amidosulfurique de formule :

(I) (OH)-SO₂-NH₂

avec un acide halogénosulfonique de formule :

(II) (OH)-SO₂-X

où X représente un atome d'halogène, et comprenant une réaction avec une base qui est un sel formé avec le cation C⁺.

L'invention concerne également un procédé de préparation d'acide bis(fluorosulfonyl)imide de formule :

(V) F-(SO₂)-NH-(SO₂)-F

ainsi qu'un procédé de préparation de sel de bis(fluorosulfonyl)imidure de lithium de formule :

(VII) F-(SO₂)-N⁻-(SO₂)-F,Li⁺

## Description

### DOMAINE DE L'INVENTION

La présente invention concerne un procédé de préparation de sel de bis(fluorosulfonyl)imidure de lithium ou sodium, ainsi qu'un procédé de préparation de produits intermédiaires utiles pour la préparation du bis(fluorosulfonyl)imidure de lithium ou sodium, et l'utilisation du bis(fluorosulfonyl)imidure de lithium ou sodium ainsi obtenu pour la fabrication d'électrolytes et de batteries de type lithium-ion ou sodium-ion.

### ARRIERE-PLAN TECHNIQUE

Une batterie lithium-ion ou sodium-ion comprend au moins une électrode négative, une électrode positive, un séparateur et un électrolyte. L'électrolyte est constitué d'un sel de lithium ou sodium dissous dans un solvant qui est généralement un mélange de carbonates organiques, afin d'avoir un bon compromis entre la viscosité et la constante diélectrique.

Parmi les sels les plus utilisés figure l'hexafluorophosphate de lithium (LiPF6), qui possède beaucoup des nombreuses qualités requises mais présente le désavantage de se dégrader sous forme de gaz d'acide fluorhydrique. Cela pose des problèmes de sécurité, notamment dans le contexte de l'utilisation prochaine des batteries lithium-ion pour les véhicules particuliers.

D'autres sels ont donc été développés, tels que le LiTFSI (bis(trifluoromethanesulfonyl)imidure de lithium) et le LiFSI (bis(fluorosulfonyl)imidure de lithium). Ces sels présentent peu ou pas de décomposition spontanée, et sont plus stables vis-à-vis de l'hydrolyse que le LiPF6. Néanmoins le LiTFSI présente le désavantage d'être corrosif vis-à-vis des collecteurs de courant en aluminium, ce qui n'est pas le cas du LiFSI. Le LiFSI semble donc une alternative prometteuse au LiPF6.

Il existe plusieurs voies de synthèse connues pour la fabrication de bis(fluorosulfonyl)imidure de lithium. L'une de ces voies consiste en la réaction de l'acide perfluorosulfonique avec de l'urée : voir le document WO 2010/113483 à cet égard. Les produits de cette réaction sont ensuite dissous dans l'eau et le bis(fluorosulfonyl)imide est précipité sous forme de sel avec du tétrabutylammonium. Mais cette voie de synthèse n'est pas viable à grande échelle car le rendement global est très faible.

Une autre voie consiste à faire réagir du difluorosulfoxyde avec de l'ammoniaque : voir le document WO 2010/113835 à cet égard. Mais cette méthode forme également de nombreux produits secondaires, ce qui nécessite des étapes de purification coûteuses.

Par ailleurs, le document WO 2009/123328 décrit de manière générale la fabrication de composés sulfonylimides. Le document décrit notamment la réaction entre l'acide amidosulfurique et le chlorure de thionyle, puis avec l'acide chlorosulfonique, pour former le bis(chlorosulfonyl)imide, qui est ensuite soumis à une étape de fluoration. Or le bis(chlorosulfonyl)imide est un composé instable, ne tolérant pas la purification. De ce fait, les impuretés présentes sont conservées jusqu'à l'issue de l'étape de fluoration et rendent la séparation plus difficile.

Par conséquent, il existe un réel besoin de mettre au point un procédé permettant d'obtenir du LiFSI ou NaFSI de manière plus simple et / ou avec un meilleur rendement.

### RESUME DE L'INVENTION

L'invention concerne en premier lieu un procédé de préparation d'un sel de bis(sulfonate)imidure de formule :

(III) (SO₃⁻)-N⁻-(SO₃⁻),3C⁺

où C⁺ représente un cation monovalent, comprenant la réaction de l'acide amidosulfurique de formule :

(I) (OH)-SO₂-NH₂

avec un acide halogénosulfonique de formule :

(II) (OH)-SO₂-X

où X représente un atome d'halogène, et comprenant une réaction avec une base qui est un sel formé avec le cation C⁺. Dans le cas ou C⁺ est un proton H⁺, la base est l'eau.

Selon un mode de réalisation, X représente un atome de chlore.

Selon un mode de réalisation, C⁺ représente le proton H⁺, l'ion potassium K⁺, sodium Na+, lithium Li⁺ ou césium Cs⁺, de préférence le proton H⁺, l'ion Na+ et l'ion potassium K⁺.

Selon un mode de réalisation, le procédé comprend la réaction de l'acide amidosulfurique de formule (I) avec l'acide halogénosulfonique de formule (II), en présence d'une base non nucléophile comprenant le cation C⁺, ladite base non nucléophile étant de préférence le carbonate de potassium K₂CO₃ ou le carbonate de sodium Na₂CO₃.

Selon un mode de réalisation alternatif, le procédé comprend la réaction de l'acide amidosulfurique de formule (I) avec l'acide halogénosulfonique de formule (II), en présence d'une première base pour fournir le bis(sulfonyl)imide de formule (IV) :

(IV) (OH)-SO₂-NH-SO₂-(OH)

puis la réaction du bis(sulfonyl)imide de formule (IV) avec une deuxième base qui est un sel formé avec le cation C⁺, pour obtenir le sel de bis(sulfonate)imidure de formule (III).

Selon un mode de réalisation, la première base est la triéthylamine, et la deuxième base est choisie parmi l'hydroxyde de potassium, l'hydroxyde de sodium et le carbonate de potassium.

Selon un autre mode de réalisation alternatif, le procédé comprend la réaction de l'acide amidosulfurique de formule (I) avec l'acide halogénosulfonique de formule (II), en présence d'un agent chlorant tel que le chlorure de thionyle pour fournir après hydrolyse le bis(sulfonyl)imide de formule (IV).

Selon un mode de réalisation, le procédé comprend une étape de purification du sel de bis(sulfonate)imidure de formule (III), de préférence par recristallisation dans l'eau ou dans un solvant polaire tel qu'un alcool.

L'invention a également pour objet un procédé de préparation d'acide bis(fluorosulfonyl)imide de formule :

(V) F-(SO₂)-NH-(SO₂)-F

comprenant la préparation d'un sel de bis(sulfonate)imidure de formule (III) ainsi que décrit ci-dessus, suivie de la fluoration dudit sel de bis(sulfonate)imidure.

Selon un mode de réalisation, la fluoration du sel de bis(sulfonate)imidure comprend la réaction du sel de bis(sulfonate)imidure avec un agent fluorant, de préférence choisi parmi le fluorure d'hydrogène, le trifluorure de soufre diéthylamine et le tétrafluorure de soufre.

Selon un mode de réalisation alternatif, la fluoration du sel de bis(sulfonate)imidure comprend : (a) la chloration du sel de bis(sulfonate)imidure au moyen d'un agent chlorant, de préférence choisi parmi le chlorure de thionyle, le pentachlorure de phosphore, l'oxychlorure de phosphore et le chlorure d'oxalyle, pour obtenir un sel de bis(chlorosulfonyl)imidure de formule :

(VI) Cl-(SO₂)-N⁻-(SO₂)-Cl,C⁺

puis (b) la fluoration du sel de bis(chlorosulfonyl)imidure de formule (VI) au moyen d'un agent fluorant pour obtenir l'acide bis(fluorosulfonyl)imide de formule (V), l'agent fluorant étant de préférence choisi parmi le fluorure d'hydrogène, le trifluorure de soufre diéthylamine, le tétrafluorure de soufre et les sels fluorés, notamment le fluorure de zinc.

L'invention a également pour objet un procédé de préparation de sel de bis(fluorosulfonyl)imidure de lithium ou de sodium de formule :

(VII) F-(SO₂)-N⁻-(SO₂)-F,M⁺

avec M représentant Li ou Na, comprenant la préparation d'acide bis(fluorosulfonyl)imide de formule (V) ainsi que décrit ci-dessus, puis la réaction de cet acide bis(fluorosulfonyl)imide avec une base lithiée ou sodée.

L'invention a tout particulièrement pour objet un procédé de préparation de sel de bis(fluorosulfonyl)imidure de lithium de formule (VII).

Selon un mode de réalisation, la base lithiée ou sodée est choisie parmi l'hydroxyde de lithium ou sodium ou le carbonate de lithium ou sodium.

L'invention a également pour objet un procédé de fabrication d'un électrolyte, comprenant la préparation de sel de bis(fluorosulfonyl)imidure de formule (VII) ainsi que décrit ci-dessus, et la dissolution du sel de bis(fluorosulfonyl)imidure dans un solvant.

L'invention a également pour objet un procédé de fabrication d'une batterie ou d'une cellule de batterie, comprenant la fabrication d'un électrolyte ainsi que décrit ci-dessus et l'insertion de cet électrolyte entre une anode et une cathode.

L'invention a également pour objet un sel de bis(sulfonate)imidure, de formule :

(III) (SO₃⁻)-N⁻-(SO₃⁻),3C⁺

où C⁺ représente un cation monovalent.

Selon un mode de réalisation, C+ représente l'ion H⁺ ou l'ion Na⁺ ou l'ion Li⁺ ou l'ion Cs⁺ ou l'ion K⁺, et de préférence l'ion H⁺ ou l'ion Na⁺ ou l'ion K⁺.

L'invention a en outre pour objet un composé (sel ou acide) de bis(chlorosulfonyl)imidure de formule (VI). Ce composé peut être isolé avant l'étape de fluoration (b).

La présente invention permet de surmonter les inconvénients de l'état de la technique. Elle fournit plus particulièrement un procédé permettant d'obtenir du LiFSI ou NaFSI de manière plus simple et / ou avec un meilleur rendement.

Ceci est accompli grâce à la mise au point d'un procédé de préparation d'un trisel de bis(sulfonate)imidure et d'un cation, comprenant la réaction de l'acide amidosulfurique avec un acide halogénosulfonique avec l'ajout d'au moins une base qui est un sel comprenant le cation susmentionné.

Ce trisel de bis(sulfonate)imidure peut ensuite servir à préparer du bis(fluorosulfonyl)imide, qui permet à son tour d'obtenir le LiFSI ou NaSI, et ce avec un meilleur rendement que dans les voies de synthèse proposées dans l'état de la technique.

Par rapport au document WO 2009/123328, le procédé selon la présente invention comprend l'isolation du sel bis(chlorosulfonyl)imide (VI) permettant ainsi d'éliminer des impuretés, telle que du chlorosulfonique résiduel, formées lors de la première étape.

Un autre objet de l'invention est le bis(fluorosulfonyl)imidure de lithium ou de sodium de haute pureté.

### DESCRIPTION DE MODES DE REALISATION DE L'INVENTION

L'invention est maintenant décrite plus en détail et de façon non limitative dans la description qui suit.

L'invention prévoit de préparer le sel de bis(fluorosulfonyl)imidure de lithium selon le schéma général suivant en trois parties:
1) (OH)-SO₂-NH₂ + (OH)-SO₂-X → (SO₃⁻)-N⁻-(SO₃⁻),3C⁺
2) (SO₃⁻)-N⁻-(SO₃⁻),3C⁺ → F-(SO₂)-NH-(SO₂)-F
3) F-(SO₂)-NH-(SO₂)-F → F-(SO₂)-N⁻-(SO₂)-F,M⁺

### 1^{ère} partie - préparation du trisel de bis(sulfonate)imidure

Deux variantes sont envisagées pour cette première partie. La première variante répond au schéma réactionnel suivant :

(OH)-SO₂-NH₂ + (OH)-SO₂-X + zCₓB_{y} → (SO₃⁻)-N⁻-(SO₃⁻),3C⁺ + z'B_{y'}H_{x'} + CX

Dans ce schéma précédent, (OH)-SO₂-NH₂ est l'acide amidosulfurique, dont la formule est notée (I) ; (OH)-SO₂-X est un acide halogénosulfonique (X représentant un atome d'halogène), dont la formule est notée (II) ; et CₓB_{y} est une base non nucléophile (c'est-à-dire une base organique qui n'est pas susceptible d'interférer avec la réaction, en venant s'additionner de façon permanente sur (OH)-SO₂-X), C⁺ représentant le cation, monovalent, issu de cette base. x, y, z, x', y' et z' sont des nombres entiers ou fractionnaires, tels que le produit zx et le produit z'x' sont égaux à 4.

La formule du trisel (SO₃⁻)-N⁻-(SO₃⁻),3C⁺ est notée (III).

De préférence, X représente le chlore.

C⁺ représente par exemple l'ion potassium K⁺. CₓB_{y} représente par exemple le carbonate de potassium K₂CO₃. Dans ce cas C représente le potassium K, B représente CO₃, x vaut 2, y vaut 1, z vaut 2, x' vaut 2, y' vaut 1 et z' vaut 2.

Alternativement, C⁺ peut représenter par exemple l'ion sodium Na⁺, l'ion césium Cs⁺, l'ion lithium Li⁺ ou l'ion H⁺.

La réaction ci-dessus peut être par exemple effectuée à une température de 0 à 150°C (de préférence de 0 à 50°C, de manière plus particulièrement préférée de 10 à 40°C et notamment de 15 à 30°C), et à une pression allant de la pression atmosphérique jusqu'à 15 bars. L'acide sulfamique est de préférence le réactif limitant et l'acide halogénosulfonique (OH)-SO₂-X peut être utilisé en excès (1 à 3 équivalent).

La deuxième variante répond au schéma réactionnel suivant :

(OH)-SO₂-NH₂ + (OH)-SO₂-X + B' → (OH)-SO₂-NH-SO₂-(OH) + B'H⁺,X⁻

(OH)-SO₂-NH-SO₂-(OH) + zCₓB_{y} → (SO₃⁻)-N⁻-(SO₃⁻),3C⁺ + z'B_{y'}H_{x'}

Dans ce schéma, (OH)-SO₂-NH-SO₂-(OH) est le bis(sulfonyl)imide, dont la formule est notée (IV) ; X représente encore un atome d'halogène ; B' est une base nucléophile ou non ; CₓB_{y} est une base nucléophile ou non, C⁺ représentant le cation, monovalent, issu de cette base. x, y, z, x', y' et z' sont des nombres entiers ou fractionnaires, tels que le produit zx et le produit z'x' sont égaux à 3. Dans le schéma réactionnel ci-dessus, les deux étapes sont des étapes successives, et le bis(sulfonyl)imide de formule (IV) n'est pas isolé.

Dans le cas où C⁺ est un proton H⁺, la deuxième variante comprend que la première étape.

De préférence, X représente le chlore.

C⁺ représente par exemple l'ion potassium K⁺.

CₓB_{y} représente par exemple l'hydroxyde de potassium (KOH). L'hydroxyde de sodium (NaOH) ou le carbonate de potassium (K₂CO₃).

B' représente par exemple la triéthylamine (NEt₃).

Le schéma réactionnel ci-dessus peut être par exemple mis en œuvre à une température de 0 à 150°C (de préférence de 0 à 50°C, de manière plus particulièrement préférée de 10 à 40°C et notamment de 15 à 30°C) et à une pression allant de la pression atmosphérique à 15 bars. L'acide sulfamique est de préférence le réactif limitant et l'acide halogénosulfonique (OH)-SO₂-X peut être utilisé en excès (1 à 3 équivalent). La base B' est également utilisée comme solvant de réaction, et la base CₓB_{y} est ajoutée en excès jusqu'à l'obtention d'un pH basique de 8 à 14.

A l'issue de cette première partie, le composé (trisel ou acide) de formule (III) est de préférence purifié. En effet, le trisel (III) ou acide est peu soluble dans l'eau alors que les impuretés formées lors de la réaction sont très soluble dans l'eau dans des conditions basiques. La purification peut également se faire dans d'autres solvants polaires tels que les alcools.

### 2^{ème} partie - préparation de l'acide bis(fluorosulfonyl)imide

Deux variantes sont envisagées pour cette deuxième partie. La première variante comprend une chloration puis une fluoration, alors que la deuxième variante comprend une fluoration directe.

La première variante répond au schéma réactionnel suivant :

(SO₃⁻)-N⁻-(SO₃⁻),3C⁺ + x A₁ → Cl-(SO₂)-N⁻-(SO₂)-Cl,C⁺ + A₂

Cl-(SO₂)-N⁻-(SO₂)-Cl,C⁺ + 3HF → F-(SO₂)-NH-(SO₂)-F + 2HCl + CF

Dans ce schéma, F-(SO₂)-NH-(SO₂)-F est l'acide bis(fluorosulfonyl)imide, dont la formule est notée (V) ; A₁ représente un agent chlorant ; A₂ représente de manière générique un ou plusieurs produits de la réaction de chloration ; C⁺ représente toujours le cation monovalent décrit ci-dessus ; x est un nombre entier ou fractionnaire ; Cl-(SO₂)-N⁻-(SO₂)-Cl,C⁺ est un sel de bis(chlorosulfonyl)imidure, dont la formule est notée (VI).

A₁ peut par exemple être le chlorure de thionyle SOCl₂ (x=1), auquel cas A₂ représente 2 KCl + 2 SO₂, si C+ est l'ion potassium.

A₁ peut également être le pentachlorure de phosphore (PCl₅), l'oxychlorure de phosphore (POCl₃) ou le chlorure d'oxalyle.

La réaction de chloration peut être par exemple effectuée à une température de 0 à 150°C et à une pression allant de la pression atmosphérique jusqu'à 15 bars. L'agent chlorant est de préférence utilisé en excès et fait généralement office de solvant. La température de la réaction est avantageusement voisine de la température d'ébullition du solvant. Par exemple, dans le cas du chlorure de thionyle, la température d'ébullition est voisine de 76°C, et la température de la réaction sera donc par exemple de 60 à 90°C, ou de 70 à 80°C.

En ce qui concerne la réaction de fluoration à proprement parler, celle-ci peut être par exemple effectuée à une température de 0 à 350°C (de préférence de 0 à 50°C, de manière plus particulièrement préférée de 10 à 40°C et notamment de 15 à 30°C) et à une pression allant de la pression atmosphérique à 15 bars.

Il est également possible d'utiliser d'autres agents de fluoration à la place de HF, tels que le trifluorure de soufre diéthylamine (DAST) ou le tétrafluorure de soufre (SF₄), ou bien encore des sels fluorés de formule CₓF_{y} où x et y sont des entiers positifs et C un cation. Par exemple CₓF_{y} peut être le fluorure de zinc ZnF₂, comme décrit dans le document WO 2009/123328.

La deuxième variante répond par exemple au schéma réactionnel suivant :

(SO₃⁻)-N⁻-(SO₃⁻),3C⁺ + 5 HF → F-(SO₂)-NH-(SO₂)-F + 2H₂O + 3CF

Dans ce schéma, C⁺ représente toujours le cation monovalent décrit ci-dessus, par exemple K⁺.

La réaction peut être par exemple effectuée à une température de 0 à 350°C (de préférence de 0 à 50°C, de manière plus particulièrement préférée de 10 à 40°C et notamment de 15 à 30°C) et à une pression allant de la pression atmosphérique jusqu'à 15 bars. Le fluorure d'hydrogène est généralement utilisé en excès. La réaction est effectuée sans solvant.

A la place du fluorure d'hydrogène, il est possible d'utiliser d'autres agents de fluoration, tels que le trifluorure de soufre diéthylamine (DAST) ou le tétrafluorure de soufre (SF₄).

De tels agents de fluoration étant plus réactifs que le fluorure d'hydrogène, ils peuvent être utilisés en moindre excès que le fluorure d'hydrogène, dans les mêmes gammes de pression et de température.

L'acide bis(fluorosulfonyl)imide est ensuite purifié ; en fin de réaction l'acide est extrait du solide résiduel à l'aide d'un solvant organique, car les impuretés ne sont pas ou peu solubles dans les solvants organiques. Ce solvant organique est de préférence le diméthylcarbonate.

### 3^{ème} partie - préparation du MFSI

Cette troisième partie répond au schéma réactionnel suivant :

F-(SO₂)-NH-(SO₂)-F + MB → F-(SO₂)-N⁻-(SO₂)-F,M⁺ + BH

F-(SO₂)-N⁻-(SO₂)-F,M⁺ est le LiFSI ou NaFSI, dont la formule est notée (VII). MB est une base lithiée ou sodée, c'est-à-dire une base sous forme de sel formé à partir du cation lithium Li⁺ ou Na⁺ et d'un anion B⁻. Cette base peut être par exemple l'hydroxyde de lithium ou de sodium ou le carbonate de lithium ou de sodium.

La réaction peut être par exemple effectuée à une température de 25 à 80°C. La base lithiée ou sodée est utilisée dans une proportion de 1 à 1,5 équivalents, de préférence dans l'eau, ou encore dans un solvant polaire tel qu'un alcool.

Selon la présente invention, la pureté du bis(fluorosulfonyl)imidure de lithium ou de sodium (MFSI) est de préférence au moins égale à 99,5 % en poids, avantageusement au moins égale à 99,9 % en poids.

Les impuretés, telles que LiCl, LiF et FSO₃Li ou NaCl, NaF et FSO₃Na, présentes dans le sel de bis(sulfonate)imidure representent chacun, de préférence au plus 1000 ppm, avantageusement au plus 500 ppm.

Quelque soit le mode de réalisation, le FSO₃Li représente, de préférence, au plus 5 ppm.

Quelque soit le mode de réalisation selon la présente invention, le bis(fluorosulfonyl) imidure de lithium ou de sodium est de préférence exempt d'eau et d'impuretés constituées de sels formés d'un cation issu du groupe 11 à 15 et période 4 à 6 du Tableau Périodique (exemples Zu,Cu,Sn,Pb,Bi).

Ces impuretés sont néfastes aux performances de la batterie Li-ion ou Na-ion de part leur activité électrochimique.

### Préparation d'un électrolyte

Le MFSI préparé comme décrit ci-dessus peut être utilisé pour la préparation d'un électrolyte, en le dissolvant dans un solvant approprié.

Par exemple, ainsi que cela est décrit dans le document J. Electrochemical Society, 2011, 158, A74-82, le LiFSI peut être dissous à une concentration de 1 mol/L dans un mélange d'éthylenecarbonate (EC), de diméthylcarbonate (DMC) et d'éthylméthylcarbonate (EMC) à 5 pour 2 pour 3 en volume ; un tel électrolyte présente montre une très bonne conductivité, une bonne stabilité en cyclage et une corrosion de l'aluminium au-dessus de 4,2 V.

Cet électrolyte peut ensuite être utilisé pour la fabrication de batteries ou de cellules de batterie, en le disposant entre une cathode et une anode, de manière connue en soi.

### EXEMPLES

Les exemples suivants illustrent l'invention sans la limiter.

### Exemple 1 - synthèse du trisel de bis(sulfonate)imidure de potassium

La réaction est réalisée sans solvant dans un ballon en verre sec. Sous agitation, 1,1 mL d'acide chlorosulfonique est additionné sur 1,61 g d'acide sulfamique. Ensuite, 2 mL de triéthylamine sont ajoutés. La réaction est laissée sous agitation pendant 1 journée. La réaction est arrêtée par l'addition de 20 mL d'eau. Ensuite on ajoute 2,79 g d'hydroxyde de potassium. Le produit final précipite et est récupéré par filtration et lavé avec 2 x 30 mL de CH₂Cl₂.

### Exemple 2 - synthèse du bis(chlorosulfonyl)imidure de potassium

Dans un ballon de 250 mL, on ajoute 15,3 g du trisel. On ajoute ensuite goutte à goutte 60 mL de chlorure d'oxalyle puis 1 mL de diméthylformamide. Le milieu réactionnel est agité pendant 3 heures à reflux et la solution devient de couleur jaune. En fin de réaction, la solution est filtrée et on obtient alors un solide blanc (m = 19,0 g) contenant le composé chloré et du chlorure de potassium.

### Exemple 3 - synthèse du bis(fluorosulfonyl)imide

Dans un autoclave de 800 mL, on ajoute 19,0 g du mélange de bis(chlorosulfonyl)imidure de potassium et de chlorure de potassium. On ajoute ensuite 20 g de fluorure d'hydrogène à température ambiante. Le milieu réactionnel est agité pendant 3 heures. L'excès de fluorure d'hydrogène et le chlorure d'hydrogène dégagé sont ensuite éliminés par flux d'air. On obtient alors un solide de couleur jaune or.

## Revendications

1. Bis(fluorosulfonyl)imidure de lithium de pureté d'au moins égale à 99,5 % en poids et de préférence d'au moins 99,9 % en poids.

2. Bis(fluorosulfonyl)imidure de lithium selon la revendication 1, **caractérisé en ce qu'**il comprend au plus 1 000 ppm de chacun de LiCl, LiF et FSO₃Li.

3. Bis(fluorosulfonyl)imidure de lithium ou de sodium selon l'une quelconque des revendications 1 ou 2, **caractérisé en ce qu'**il contient au plus 5 ppm de FSO₃Li^{.}
